# EUROPÄISCHE PATENTSCHRIFT

(11) **EP 3 525 914 B1**
(45) Veröffentlichungstag und Bekanntmachung des Hinweises auf die Patenterteilung: **02.12.2020**
(21) Anmeldenummer: 17797055.5
(22) Anmeldetag: 13.10.2017
(51) Int. Cl.: B01D 46/24, B01D 46/52

(54) **LUFTFILTERELEMENT**
AIR FILTER ELEMENT
ÉLÉMENT FILTRE À AIR

(30) Priorität: 17.10.2016 DE 102016012327
(43) Veröffentlichungstag der Anmeldung: 21.08.2019
(73) Patentinhaber: Mann+Hummel GmbH, 71636 Ludwigsburg (DE)
(72) Erfinder: NEEF, Pascal, 71229 Leonberg (DE)
(74) Vertreter: Nickolaus, Mathias
(86) Internationale Anmeldenummer: PCT/EP2017/076233
(87) Internationale Veröffentlichungsnummer: WO 2018/073130

(56) Entgegenhaltungen:
- DE-A1-102011 011 595
- DE-B4-102013 002 057
- JP-A- 2009 113 015
- US-A- 6 059 851

## Beschreibung

### Technisches Gebiet

Die Erfindung bezieht sich auf ein Luftfilterelement, insbesondere Rund(luft)filterelement, insbesondere zur Gasfiltration, nach dem Oberbegriff des Anspruches 1.

### Stand der Technik

Aus DE 10 2013 002057 B4 ist ein Luftfilter mit ovalzylindrischem Hauptfilterelement bekannt. Aus US 6 059 851 A ist ein keilförmiges Filterelement zur Verwendung ohne Gehäuse bekannt. In der DE 10 2004 053 118 A1 wird eine Luftfiltervorrichtung für eine Brennkraftmaschine beschrieben, die ein hohlzylindrisches Filterelement in einem Filtergehäuse aufweist, wobei das Filterelement radial von innen nach außen von der zu reinigenden Luft durchströmt wird. Die Luft wird über eine offene axiale Stirnseite in das Innere eines Filtermediumkörpers des Filterelementes geleitet und durchströmt die Wandung des Filtermediumkörpers radial von innen nach außen. Anschließend wird die gereinigte Luft über einen Auslassstutzen aus der Luftfiltervorrichtung abgeleitet.

Das Filterelement wird auf einen Einlassstutzen aufgesetzt, der sich am Boden des Filtergehäuses befindet und im montierten Zustand in den Innenraum im Filterelement hineinragt. Die einzuleitende Luft strömt über den Einlassstutzen axial in den Innenraum im Filterelement hinein und wird anschließend in Radialrichtung zur Durchströmung des Filtermediumkörpers umgelenkt.

In der DE 10 2011 011 595 A1 wird ein Filterelement zur Luftfiltration beschrieben, dessen Filtermediumkörper ringförmig umlaufend ausgebildet ist und einen innen liegenden Strömungsraum einschließt, in welchem das zu reinigende Rohfluid axial eingeführt wird. Der Filtermediumkörper, der radial von innen nach außen von dem Fluid durchströmt wird, weist eine längs gestreckte Querschnittsform mit halbkreisförmigen Schmalseiten und konkav nach innen gerichteten Längsseiten auf. Der Filtermediumkörper besitzt über seine axiale Höhe eine konstante, gleich bleibende Querschnittsform.

### Offenbarung der Erfindung

Der Erfindung liegt die Aufgabe zugrunde, ein Luftfilterelement, insbesondere Rundfilterelement, bevorzugt Rundluftfilterelement mit einem längs gestreckten Filtermediumkörper mit einfachen konstruktiven Maßnahmen in der Weise auszubilden, dass bei kompakten Abmessungen eine hohe Filtrationsleistung gewährleistet ist.

Diese Aufgabe wird erfindungsgemäß mit den Merkmalen des Anspruches 1 gelöst. Die Unteransprüche geben zweckmäßige Weiterbildungen an.

Das erfindungsgemäße Luftfilterelement und/oder Rundfilterelement wird bevorzugt zur Gasfiltration eingesetzt, beispielsweise zur Filtration von Luft, insbesondere im Ansaugtrakt einer Brennkraftmaschine eines Fahrzeugs. Das Filterelement weist einen ringförmig geschlossenen Filtermediumkörper auf, dessen Wandung von dem zu reinigenden Fluid in Radialrichtung durchströmt wird. Der Filtermediumkörper umschließt einen innen liegenden Strömungsraum, der von der Innenwand des Filtermediumkörpers begrenzt wird, wobei die Innenwand die Rohseite bildet. Das zu reinigende Fluid wird axial in den innen liegenden Strömungsraum hineingeleitet und durchströmt die Wandung des Filtermediumkörpers bezogen auf dessen Längsachse in Radialrichtung. Die Außenseite des Filtermediumkörpers bildet die Reinseite, über die das gereinigte Fluid aus der Wandung des Filtermediumkörpers austritt. Eine Durchströmung von außen nach innen wäre jedoch auch denkbar. Die axialen Stirnseiten des Filtermediumkörpers sind von Endscheiben strömungsdicht abgedeckt. Eine Endscheibe weist eine mit dem innen liegenden Strömungsraum kommunizierende, zentrale Öffnung für die axiale Strömungsführung des Fluids auf, die gegenüberliegende Endscheibe ist dagegen geschlossen ausgebildet und schließt den innen liegenden Strömungsraum axial nach außen dicht ab.

Zweckmäßigerweise ist die mit der zentralen Öffnung versehene Endscheibe (offene Endscheibe) am Filterelement an ihrer radialen Innenseite abgerundet ausgebildet, wodurch das Hineinströmen der Rohluft in den Innenraum im Filtermediumkörper erleichtert wird. Der Radius der Rundung ist an der radialen Innenseite der Endscheibe vorteilhafterweise größer als an der radialen Außenseite. Der Radius an der radialen Innenseite ist gegebenenfalls so groß ausgeführt, dass der Beginn des Radius an der Stirnseite noch innerhalb der Kontur des Filtermediumkörpers liegt.

Das Filterelement und der Filtermediumkörper sind längs gestreckt ausgebildet und weisen eine ovale oder ovalisierte Querschnittsform auf. Die Querschnittsform ergibt bevorzugt jeweils zwei einander gegenüberliegenden Schmalseiten und zwei die Schmalseiten verbindende, einander gegenüberliegende Langseiten. Die längs gestreckte Querschnittsform umfasst beispielsweise eine Querschnittsform mit im Wesentlichen parallelen Langseiten (auch als Längsseiten bezeichenbar) und insbesondere halbkreisförmigen Schmalseiten. Die Langseiten weisen eine geringere Krümmung als die Schmalseiten auf, so dass ein ovaler, bevorzugt achssymmetrischer Querschnitt entsteht. Bevorzugt ist der Durchmesser des Filtermediumkörpers in Richtung Hauptachse (im Wesentlichen parallel zu den Langseiten, also der maximale Durchmesser des Filtermediumkörpers) mindestens doppelt, bevorzugt dreimal so groß wie der Durchmesser in Richtung der zur Hauptachse senkrecht stehenden Nebenachse (senkrecht zu den Langseiten, also der minimale Durchmesser des Filtermediumkörpers). Daraus wird ersichtlich, dass bevorzugt der Querschnitt des Filtermediumkörpers die Form ähnlich eines flach gedrückten Kreises hat, so dass ein ellipsenartiger Querschnitt entsteht, dessen Umfang jedoch nicht notwendiger Weise stetig oder glatt im engen geometrischen Sinne einer Ellipse sein muss. Bevorzugt verlaufen die Innenwand und die Außenwand des Filtermediumkörpers konzentrisch zueinander, so dass der Filtermediumkörper eine konstante radiale Dicke aufweist.

Das Filterelement weist bevorzugt eine sich in Achsrichtung verjüngende Querschnittsform auf, so dass der Außenumfang des Rundfilterelements im Bereich der ersten Endscheibe unterschiedlich groß ist im Vergleich zum Außenumfang des Rundfilterelements im Bereich der gegenüberliegenden, zweiten Endscheibe. Es kann in diesem Fall von einem oval-konischen Rundfilterelement gesprochen werden. Im Bereich beider Endscheiben weist das Rundfilterelement jeweils eine ovale oder ovalisierte, längs gestreckte Querschnittsform auf.

Bei der sich verjüngenden Querschnittsform des Filterelements kann die Endscheibe an der Stirnseite mit kleinerem Außenumfang geschlossen ausgebildet sein und den innen liegenden Strömungsraum axial verschließen, wohingegen die gegenüberliegende Endscheibe am größeren Außenumfang eine Strömungsöffnung für das Fluid aufweist, insbesondere für das Einleiten des Rohfluids in den innen liegenden Strömungsraum.

Bevorzugt weist die Endscheibe an der Stirnseite mit kleinerem Außenumfang und/oder die geschlossene Endscheibe, in Richtung der Langseiten gesehen einen geringeren maximalen Durchmesser auf als die Endscheibe mit größerem Außenumfang und/oder die offene Endscheibe. So kann der um die geschlossene Endscheibe herum verfügbare Strömungsquerschnitt vergrößert werden. Hierbei liegt in Richtung der Langseiten gesehen der Unterschied der (maximalen) Durchmesser zwischen offener und geschlossener Endscheibe bevorzugt im Bereich von ein bis zwei Faltenhöhen. Als Faltenhöhe wird bezeichnet der Abstand zwischen einer rohseitigen Faltkante zu einer direkt auf diese entlang der Erstreckung des Filtermediums folgenden reinseitigen Faltkante.

Des Weiteren sind auch Ausführungen möglich, bei denen die Endscheibe an der Stirnseite mit größerem Außenumfang geschlossen ausgebildet ist und den innen liegenden Strömungsraum axial verschließt und die gegenüberliegende Endscheibe am kleineren Außenumfang eine Strömungsöffnung für das Einleiten von Fluid in den innen liegenden Strömungsraum aufweist. Der Filtermediumkörper weist erfindungsgemäß im Bereich seiner verjüngten Stirnseite an seinen beiden Langseiten, jeweils eine radial nach innen gerichtete, konkave Einschnürung auf. Dagegen sind die beiden Langseiten des Filtermediumkörpers im Bereich der gegenüberliegenden, größeren Stirnseite nicht konvex, beispielsweise konkav, bevorzugt geradlinig oder zumindest annähernd geradlinig ausgebildet. Dementsprechend ändert sich die Querschnittsfläche des Filtermediumkörpers ausgehend von der größeren Stirnseite hin zur verjüngten Stirnseite, indem sich die Langseiten des Filtermediumkörpers sich von einer leicht konvexen oder zumindest annähernd geradlinigen Form zu einer konkav und radial nach innen gerichteten oder radial nach innen gewölbten Form ändern. Wesentlicher Gedanke ist hierbei, das Filter-element so zu gestalten, dass sowohl auf der Reinseite als auch auf der Rohseite optimale Strömungsquerschnitte in axialer Richtung erreicht werden können, d. h. insbesondere möglichst große Strömungsquerschnitte. So kann der durch das Filterelement verursachte Druckverlust minimiert werden. Die größere Stirnseite des Filtermediumkörpers umgibt eine Strömungsöffnung, weshalb dort eine konkave Einschnürung, wie sie an der verjüngten Stirnseite vorgesehen ist, nachteilig wäre. Daher sollten erfindungsgemäß die Langseiten, die größere Stirnseite des Filtermediumkörpers und bevorzugt auch die dort angeordnete offene Endscheibe zumindest eine geringere konkave Einschnürung aufweisen als die verjüngte Stirnseite, bevorzugt jedoch im Wesentlichen gerade oder leicht konvex ausgebildet sein. Durch die konkave Einschnürung an der verjüngten Stirnseite, die insbesondere durch eine Endscheibe geschlossen ist, kann der dort im eingebauten Zustand vorhandene Strömungsquerschnitt zwischen Außenumfang des Filtermediumkörpers und/oder der Endscheibe auf der einen Seite und Innenwandung eines das Filterelement aufnehmenden Gehäuses auf der anderen Seite druckverlustbegünstigend vergrößert werden, ohne die Filterfläche reduzieren zu müssen.

Besonders vorteilhaft für die Aufgabe der Optimierung des Strömungswiderstandes ist vorliegend, dass ein Filterelement einen ringförmig geschlossenen (runden), radial durchströmbaren Filtermediumkörper mit einer längs gestreckten Querschnittsform aufweist, wobei der Filtermediumkörper sich von einer ersten Stirnseite zur gegenüberliegenden zweiten Stirnseite bevorzugt verjüngt und im Bereich der bevorzugt verjüngten, insbesondere für eine axiale Durchströmung geschlossenen, zweiten Stirnseite an einer oder bevorzugt beiden Langseiten jeweils eine radial nach innen gerichtete Einschnürung besitzt, und weiter bevorzugt an der gegenüberliegenden, insbesondere für eine axiale Durchströmung offenen, Stirnseite eine zumindest geringere oder keine nach innen gerichtete Einschnürung an den Langseiten aufweist.

Die Langseiten im Bereich der verjüngten Stirnseite des Filtermediumkörpers sind beispielsweise bei halbkreisförmigen Schmalseiten gegenüber einer gedachten Verbindungslinie zwischen den Schmalseiten radial nach innen versetzt angeordnet. Die gedachte Verbindungslinie zwischen den gegenüberliegenden Schmalseiten stellt im Bereich der verjüngten Stirnseite des Filtermediumkörpers somit eine maximale Außenlinie dar, gegenüber der die tatsächliche Langseite des Filtermediumkörpers radial nach innen versetzt ist. Im Bereich der gegenüberliegenden, größeren Stirnseite sind dagegen keine derartigen radialen Einschnürungen ausgebildet.

Der Verlauf der Langseite in der radialen Einschnürung kann geradlinig oder nicht-geradlinig ausgebildet sein. Bei einem nicht-geradlinigen Verlauf kommen sowohl eine ballige, radial konvex nach außen gerichtete Ausführung als auch eine radial nach innen gerichtete, konkave Ausführung in Betracht, wobei in jedem Fall die Langseite vollständig oder zumindest annähernd über ihre Länge gegenüber einer Einhüllenden an der verjüngten Stirnseite radial nach innen versetzt ist.

Gemäß einer weiteren zweckmäßigen Ausführung weisen die beiden gegenüberliegenden Einschnürungen an den Langseiten über ihre Länge gesehen einen konstanten Abstand zueinander auf. In einer alternativen Ausführung ist der Abstand nicht-konstant.

Des Weiteren ist es zweckmäßig, dass sich die radial nach innen gerichtete Einschnürung über die gesamte Langseite erstreckt. In alternativer Ausführung erstreckt sich dagegen die radiale Einschnürung nur über eine Teillänge an den Langseiten, die jedoch bevorzugt mindestens 50 % der gesamten Langseite beträgt, beispielsweise mindestens 80 % der Langseite.

In Achsrichtung gesehen, also bezogen auf die Höhe des Filtermediumkörpers, erstreckt sich die radial nach innen gerichtete Einschnürung an den Langseiten, vorzugsweise axial über mindestens die halbe Höhe des Filtermediumkörpers, gegebenenfalls über mindestens 60 %, mindestens 70 % oder mindestens 80 % der Höhe des Filtermediumkörpers. Gegebenenfalls kommt aber auch eine geringere Höhe als die halbe Gesamthöhe des Filtermediumkörpers in Betracht.

Der Vorteil der radialen Einschnürung liegt in einem vergrößerten Ringraum zwischen der Außenseite des Filterelementes und der Innenwand des aufnehmenden Filtergehäuses. Der vergrößerte Ringraum verbessert die Strömungsverhältnisse des Fluids. Im Fall einer radialen Durchströmung des Filterelementes von innen nach außen befindet sich der Ringraum an der außen liegenden Reinseite des Filterelementes und nimmt das gereinigte Fluid auf, das über eine Abströmöffnung aus dem Filtergehäuse abgeleitet wird. Die sich verjüngende Querschnittsfläche des Filtermediumkörpers von einer Stirnseite zur gegenüberliegenden Stirnseite trägt zur Vergrößerung des Ringraums zwischen der Außenseite des Filterelementes und der Innenwand des aufnehmenden Filtergehäuses bei. Die radiale Einschnürung im Bereich der verjüngten Stirnseite vergrößert zusätzlich den Ringraum.

Das Filterelement weist vorteilhafterweise an der Außenwand des Filtermediumkörpers ein Stützgitter auf, das insbesondere formstabil ausgebildet ist. Das Stützgitter ist beispielsweise als thermoplastisches Spritzgussteil ausgebildet. Aufgrund der Durchströmung des Filtermediumkörpers radial von außen nach innen unterliegt die Wandung des Filtermediumkörpers einem radial nach außen gerichteten Druck, unter dem die Wandung bestrebt ist, sich nach außen zu wölben. Das Stützgitter an der Außenwand des Filtermediumkörpers verhindert eine Verformung der Wandung radial nach außen und hält somit während der Filtration den Filtermediumkörper in Form, so dass eine Verformung vermieden wird. Dementsprechend behält der Filtermediumkörper über einen langen Betriebszeitraum seine ursprüngliche geometrische Gestalt bei und bleiben die Strömungsverhältnisse bei der Filtration des Fluids erhalten. Außerdem erfährt der Filtermediumkörper an der Außenseite eine Abstützung durch das Stützgitter, so dass der Filtermediumkörper geringeren Belastungen unterworfen und die Gefahr einer Schädigung des Filtermediumkörpers herabgesetzt ist. Bei einer Auslegung für eine Durchströmung von außen nach innen, kann ein Stützgitter alternativ oder zusätzlich an der Innenwandung angeordnet sein, um die genannten Funktionen zu erfüllen. Vorteilhafterweise ist mindestens eine Stirnseite des Stützgitters, gegebenenfalls beide Stirnseiten in die Endscheiben eingebettet. Die Endscheibe besteht bevorzugt aus einem weicheren Material als das Stützgitter und ein Dichtungsträger am Filterelement, der ein Dichtungselement aufnimmt.

Der Filtermediumkörper ist bevorzugt als zickzackförmig gefalteter Faltenfilter mit einer Vielzahl von Filterfalten ausgebildet. Die Filterfalten verlaufen bevorzugt in oder annähernd in Radialrichtung und damit in Durchströmungsrichtung und erstrecken sich zugleich axial zwischen den beiden Stirnseiten des Filtermediumkörpers. Der Faltenfilter ist ringförmig geschlossen ausgebildet. Bevorzugt weist der Filtermediumkörper ein bahnförmiges Filtermedium auf, besonders bevorzugt ein Papier, weiter bevorzugt ein Zellulose-Papier, welches bevorzugt zur Abscheidung fester Partikel aus Luft ausgelegt ist. Das Filtermedium kann eine Feinfaserbeschichtung mit Fasern mit mittlerem Durchmesser im Bereich von 50-2000 nm aufweisen. Das Filtermedium ist weiter bevorzugt flammschutzimprägniert, bevorzugt mit einer Imprägnierung nach DIN 53 438-3 F1. Das Filtermedium hat bevorzugt eine Permeabilität von 50 - 500 l/m²s, bevorzugt 50-200 l/m²s, gemessen bei 2 mbar (200 Pa) insbesondere nach DIN EN ISO 9237. Der Faltenabstand, auch Faltenteilung genannt, d. h. der Abstand zwischen nebeneinander liegenden Faltkanten, ist bevorzugt bei dem Filterkörper an Stellen ohne wesentliche Krümmung im Bereich von 1 bis 5 mm.

Es ist insbesondere genau ein als Rundfilter ausgebildeter Filtermediumkörper im Filterelement angeordnet.

Gemäß einer weiteren vorteilhaften Ausführung ragt in eine Stirnseite des Filtermediumkörpers ein Formkörper hinein, der den Filtermediumkörper zusätzlich stabilisiert und in der Ausführung als Faltenfilter die Filterfalten in der gewünschten Position hält. In der Ausführung mit einer sich verjüngenden Querschnittsfläche befindet sich der Formkörper bevorzugt an der Stirnseite mit reduzierter Querschnittsfläche. Der Formkörper kann einteilig mit dem Stützgitter am Filtermediumkörper ausgebildet sein, so dass Stützkräfte, die auf die Stirnseite des Filterelements mit dem Formkörper wirken, über den Formkörper auf das Stützgitter geleitet werden und die Endscheibe von den Stützkräften entlastet wird.

Die Außenkontur des Formkörpers entspricht vorteilhafterweise der Außenkontur und/oder der Innenkontur des Filtermediumkörpers an deren Stirnseite, in die der Formkörper in den Filtermediumkörper hineinragt. Es kann zweckmäßig sein, den Formkörper zumindest abschnittsweise mit der benachbarten Endscheibe zu verbinden, beispielsweise am Formkörper einen Dom auszubilden, der in die Endscheibe hineinragt. Die Endscheibe, in die ein oder mehrere Abschnitte des Formkörpers hineinragen, ist vorzugsweise geschlossen ausgebildet und dichtet den Innenraum im Filtermediumkörper strömungsdicht ab. Der Formkörper kann sich gegebenenfalls zu seiner freien Stirnseite hin keilförmig verjüngen, wodurch der Herstellungsprozess des Filterelements vereinfacht und unterstützt wird. Der Formkörper ist insbesondere als längs gestreckter Körper ausgebildet und erstreckt sich zwischen gegenüberliegenden Seiten des Stützgitters.

Gemäß einer vorteilhaften Ausführung weist das Filterelement ein Dichtungselement auf, insbesondere einen umlaufenden Dichtungsring, das an einem separat von der Endscheibe ausgebildeten Dichtungsträger angeordnet und benachbart zur rohluftseitigen Endscheibe, über die das ungereinigte Fluid in den innen liegenden Strömungsraum eingeleitet wird, angeordnet ist. Das Dichtungselement liegt hierbei axial und radial auf Abstand zu der benachbarten, nächstgelegenen Endscheibe. Über das Dichtungselement erfolgt eine strömungsdichte Separierung der Roh- von der Reinseite. Aufgrund der separaten Ausführung des Dichtungsträgers von der Endscheibe ist die Endscheibe nicht den Halte- und Dichtkräften unterworfen, die über das Dichtungselement und den Dichtungsträger in Einbausituation des Filterelementes aufgenommen werden. Die Endscheibe bleibt somit unbeeinflusst von den Halte- und Dichtkräften. Aufgrund des Abstandes des Dichtungselementes und vorteilhafterweise auch des Dichtungsträgers axial und radial zur benachbarten Endscheibe weisen Dichtungsträger und Dichtungselement auch einen Abstand zur Rein- bzw. Außenseite des Filtermediumkörpers auf, so dass das Fluid ungehindert vom Dichtungsträger und vom Dichtungselement über die Reinseite des Filtermedium-körpers austreten kann. Der Dichtungsträger ist fluiddicht ausgebildet und verbindet vorteilhafterweise die nächstgelegene Endscheibe fluiddicht mit dem Dichtungselement.

Der Dichtungsträger ist zur Stirnseite der benachbarten, nächstgelegenen Endscheibe axial beabstandet. Der axiale Abstand beträgt beispielsweise, bezogen auf die gesamte axiale Höhe des Filterelements, maximal 20 % der axialen Höhe oder maximal 10 % der axialen Höhe.

Gemäß einer bevorzugten Ausführung ist der Dichtungsträger an dem Stützgitter angeordnet. Es kommt insbesondere eine einteilige Ausführung von Stützgitter und Dichtungsträger in Betracht, die vorzugsweise als Kunststoffbauteile ausgebildet sind. Die Dicht- und Halte- sowie Stützkräfte werden entsprechend über den Dichtungsträger und das Stützgitter aufgenommen, wohingegen der Filtermediumkörper von diesen Kräften entlastet ist.

Gemäß einer weiteren vorteilhaften Ausführung ist der Dichtungsträger als eine umlaufende Trägerwand ausgebildet, die auf Abstand zur außen liegenden Mantelfläche des Filtermedium-körpers verläuft. Die Trägerwand verläuft insbesondere parallel zu der außen liegenden Mantelfläche des Filtermediumkörpers. Das Dichtungselement ist vorteilhafterweise in eine Aufnahmenut in der Trägerwand eingesetzt, wobei sich die Aufnahmenut bevorzugt an oder benachbart zu einer Stirnfläche der Trägerwand befindet. Die Position des Dichtungselementes an der Trägerwand befindet sich auf der der nächstliegenden Endscheibe abgewandten Stirnfläche der Trägerwand.

Der Dichtungsträger stützt sich vorteilhafterweise in Einbaulage an einem Gehäusebauteil ab, beispielsweise an einem innen liegenden Absatz in einem Filtergrundgehäuse, das das Filter-element aufnimmt und auf das ein Gehäusedeckel aufsetzbar ist.

Eine alternative Dichtungsanordnung, die insbesondere bei einer Durchströmung des Filterelements von außen nach innen vorteilhaft ist, sieht eine radial wirkende Dichtfläche an der offenen Endscheibe vor, bevorzugt eine radial nach innen wirkende Dichtfläche. Die Dichtfläche ist hierbei bevorzugt kreis- oder ovalzylindrisch und axial abstehend von der offenen Endscheibe angeordnet. Hierfür ist bevorzugt, dass einstückig und in einem Arbeitsgang mit einer beispielsweise aus Polyurethan gegossenen offenen Endscheibe ein von deren Stirnseite axial abstehender Ringdichtwulst ausgebildet ist, welcher an seiner radialen Innenseite eine insbesondere kreis- oder ovalzylindrische Radialdichtfläche aufweist.

An der Stirnfläche, insbesondere an der Oberseite des Dichtungsträgers können gegebenenfalls, vorteilhafterweise mit axialem Abstand zur Stirnfläche, Noppen angeformt sein. Diese Noppen haben die Funktion eines Toleranzausgleiches und können Abweichungen des Dichtungsträgers von einer planen Fläche für das Aufsetzen des Gehäusedeckels und/oder das Aufsetzen auf den Absatz im Filtergrundgehäuse kompensieren. Die Noppen sind beispielsweise stabförmig ausgebildet und liegen parallel zur Seitenwand des Dichtungsträgers; die stabförmigen Noppen verlaufen zum Beispiel in Radialrichtung. In Einbaulage drücken sich die Noppen in das Material des Gehäusebauteils hinein und gleichen hierdurch Toleranzabweichungen aus.

Gemäß einer weiteren zweckmäßigen Ausführung, die sich vorzugsweise auf ein (Rund-)filter-element mit einer sich in Achsrichtung verjüngenden Querschnittsform bezieht, weist die kleinere Endscheibe radial überstehende Stütznocken auf. Vorteilhafterweise ragen diese Stütznocken in Radialrichtung nicht weiter hinaus als die gegenüberliegende Endscheibe. Auch der Dichtungsträger und das Dichtungselement erstrecken sich vorteilhafterweise in Radialrichtung maximal bis zum Außenumfang der größeren Endscheibe.

Die Stütznocken befinden sich vorzugsweise an den Langseiten und sind insbesondere an der Endscheibe, vorzugsweise an der kleineren Endscheibe angeordnet, insbesondere einteilig mit der Endscheibe ausgebildet und an dieser angeformt. Es ist aber auch möglich, zusätzlich an der Schmalseite einen oder mehrere Nocken an der Endscheibe anzuordnen. Die Nocken ragen in Radialrichtung über die Endscheibe hinaus und stützen das Filterelement im eingebauten Zustand am aufnehmenden Filtergehäuse ab.

Ein weiterer Aspekt der Erfindung bezieht sich auf eine Filtereinrichtung mit einem vorbeschriebenen (Rund-)filterelement und mit einem Filtergehäuse zur Aufnahme des (Rund-)filterelements. Zum Filtergehäuse gehört insbesondere auch ein Gehäusedeckel, der auf ein Filtergrundgehäuse aufsetzbar ist, um den Aufnahmeraum im Filtergrundgehäuse, in welchen das Filterelement eingesetzt ist, zu verschließen. In bevorzugter Ausführung weist das Filtergrundgehäuse über seine Höhe eine zumindest annähernd gleich bleibende Querschnittsfläche auf, so dass im Bereich der radialen Einschnürung am Filtermediumkörper ein verhältnismäßig großer Ringraum zwischen der Außenseite des Filterelements und der Innenwand des aufnehmenden Filtergrundgehäuses zur Aufnahme von Fluid gegeben ist.

Der Druckverlust der Filtereinrichtung mit einem erfindungsgemäßen Filterelement beträgt bei einer Strömungsgeschwindigkeit im Einströmstutzen von 10 bis 40 m/s etwa 5 bis 35 mbar.

Bevorzugt beträgt der Abscheidegrad des Filterelements, nachdem es in der Filtereinrichtung im Betrieb durch Beladung mit Partikeln einen Druckanstieg von 20 mbar aufweist, größer 98%, bevorzugt größer 99,8 %, insbesondere gemessen nach ISO 5011 mit Prüfstaub nach ISO 1203-1.

An der Innenseite des Gehäusedeckels ist, gemäß einer weiteren vorteilhaften Ausführung, eine vorzugsweise schwertförmige Strömungsleitrippe angeordnet, welche die Einleitung des Fluidstroms in den innen liegenden Strömungsraum und die gleichmäßige Partikelbelastung des Filterelements bei der Filtration des Fluids unterstützt, insbesondere auch bei nichtsymmetrischen oder nicht-parallelen Strömungsverhältnissen. Das ungereinigte Fluid wird bevorzugt von außen radial in Richtung des Filtermediumkörpers geleitet und trifft dann auf die Strömungsleitrippe an der Innenseite des Gehäusedeckels, die den auftreffenden Fluidstrom beeinflusst, beispielsweise zweiteilt und/oder axial in Richtung des innen liegenden Strömungsraums im Filtermediumkörpers geleitet.

Es kommen verschiedene Ausführungen der Strömungsleitrippe in Betracht. Die Strömungsleitrippe ist entweder geradlinig und in einer Ebene liegend ausgebildet oder, gemäß einer alternativen Ausführung, gekrümmt ausgeführt. Die Strömungsleitrippe kann sich bei geradliniger Ausführung in Achsrichtung des Filterelementes erstrecken, so dass die Wandseiten der Strömungsleitrippe parallel zur Längsachse des Filterelementes verlaufen.

Die Strömungsleitrippe kann in die Strömungsöffnung hineinragen, die in die Endscheibe des Filterelements eingebracht ist, über die das ungereinigte Fluid in den innen liegenden Strömungsraum im Filtermediumkörper eingeleitet wird.

Gemäß einer weiteren zweckmäßigen Ausführung ist in den Gehäusedeckel eine seitliche, in Radialrichtung weisende Einströmöffnung eingebracht, über die das ungereinigte Fluid radial einströmt. Die Strömungsleitrippe kann benachbart zu dieser Einströmöffnung im Gehäusedeckel angeordnet sein. Die Strömungsleitrippe kann in der Weise positioniert sein, dass die Stirnseite der Strömungsleitrippe der Einströmöffnung im Gehäusedeckel zugewandt ist. Die über den Gehäusedeckel radial herangeführte Fluidströmung trifft auf die Strömungsleitrippe und erfährt eine Ablenkung in Richtung des innen liegenden Strömungsraums im Filtermediumkörper. Die Strömungsleitrippe und die Einströmöffnung können zumindest annähernd parallel ausgerichtet sein.

Vorteilhafterweise ist auch in das Filtergrundgehäuse des Filtergehäuses eine seitliche Einströmöffnung für das heranzuführende Fluid eingebracht, wobei diese Einströmöffnung in dem Filtergrundgehäuse und die seitliche Einströmöffnung im Gehäusedeckel im montierten Zustand übereinander liegen und einen durchgehenden Strömungsweg für das herangeführte Fluid bilden.

Gemäß einer weiteren zweckmäßigen Ausführung ist in das Filtergrundgehäuse eine seitliche, vorzugsweise in Radialrichtung weisende Abströmöffnung eingebracht, über die das gereinigte Fluid abströmt. Es kann zweckmäßig sein, dass die Abströmöffnung zumindest annähernd parallel zur Einströmöffnung sowie zur Strömungsleitrippe ausgerichtet ist.

Gemäß einer weiteren zweckmäßigen Ausführung steht das Filterelement im eingebauten Zustand axial geringfügig über die Stirnseite des Filtergrundgehäuses hinaus, wodurch die Entnahme des Filterelements aus dem Filtergrundgehäuse, beispielsweise zu Wartungszwecken, erleichtert wird. Der Dichtungsträger mit dem Dichtungselement liegt mit kleinem axialen Abstand zur herausragenden Stirnseite des Filterelements und sorgt für die strömungsdichte Separierung zwischen dem außen liegenden Abschnitt des Filterelements und dem innen liegenden, im Filtergrundgehäuse aufgenommenen Abschnitt des Filterelements.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: in Explosionsdarstellung eine Filtereinrichtung zur Gasfiltration, mit einem Filtergrundgehäuse, einem Filterelement und einem Gehäusedeckel,
- Fig. 2: in perspektivischer Ansicht die Filtereinrichtung im montierten Zustand,
- Fig. 3: eine perspektivische Ansicht des Filterelementes von oben,
- Fig. 4: eine perspektivische Ansicht des Filterelementes von unten,
- Fig. 5: eine Innenansicht des Gehäusedeckels, mit einer Strömungsleitrippe an der Innenseite des Gehäusedeckels,
- Fig. 6: in perspektivischer Ansicht einen Schnitt durch die Filtereinrichtung im Bereich des Gehäusedeckels,
- Fig. 7: einen weiteren Schnitt durch die Filtereinrichtung,
- Fig. 8: eine Draufsicht auf ein Filterelement, dessen verjüngte Stirnseite radial nach innen gerichtete Einschnürungen aufweist,
- Fig. 9: das Filterelement ohne Stützgitter in einer Ansicht von unten,
- Fig. 10: das Filterelement mit Stützgitter und Dichtungsträger in einer Ansicht von unten,
- Fig. 11: einen Längsschnitt einer alternativen Ausführungsform eines Filterelements.

In den Figuren sind gleiche Bauteile mit gleichen Bezugszeichen versehen.

### Ausführungsform(en) der Erfindung

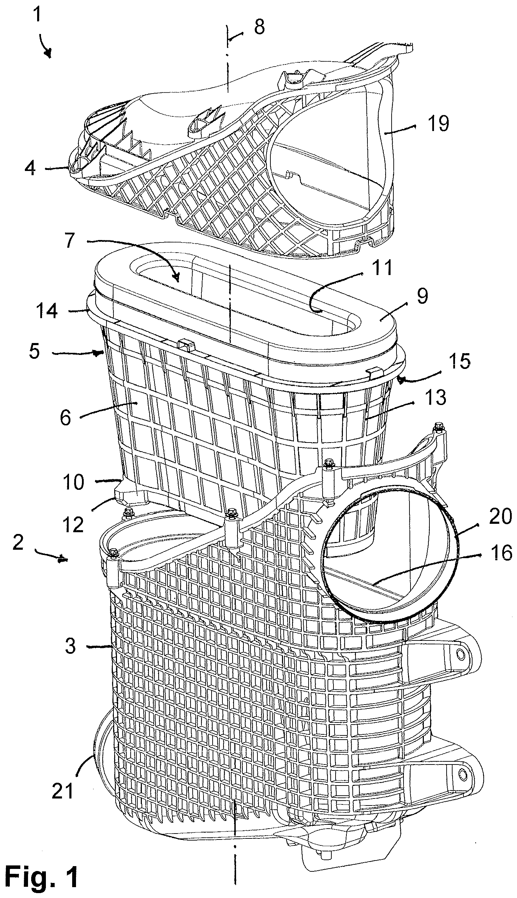

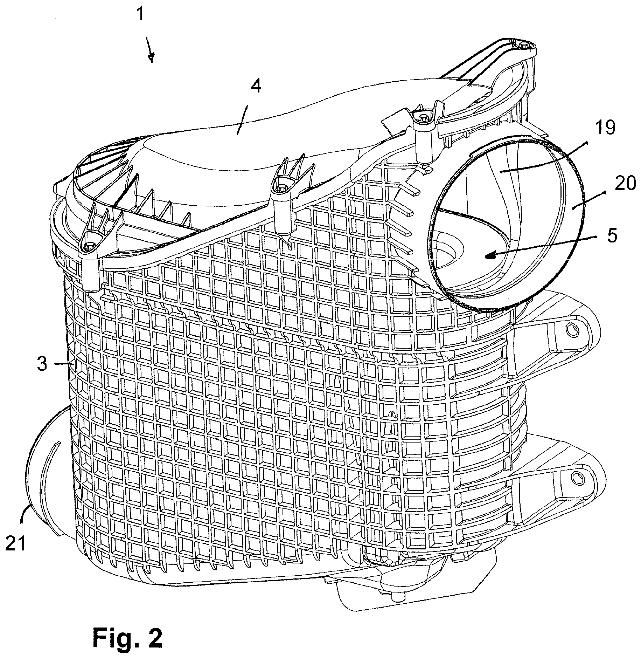

In den Fig. 1, 2, 6 und 7 ist eine Filtereinrichtung 1 dargestellt, die vorzugsweise zur Gasfiltration, insbesondere zur Luftfiltration im Ansaugtrakt einer Brennkraftmaschine eingesetzt wird. Die Filtereinrichtung 1 umfasst ein Filtergehäuse 2, das sich aus einem Filtergrundgehäuse 3 und einem Gehäusedeckel 4 zusammensetzt, und ein Filterelement 5, das in das Filtergrundgehäuse 3 einsetzbar ist. Der Gehäusedeckel 4 verschließt den Aufnahmeraum im Filtergrundgehäuse zur Aufnahme des Filterelementes 5.

Das Filterelement 5 ist, wie den Fig. 1, 3 und 4 zu entnehmen, mit einem Filtermediumkörper 6 ausgestattet, an dem die Filtration des zu reinigenden Fluids stattfindet. Das Filterelement 5 ist als Rundfilterelement ausgebildet, entsprechend ist auch der Filtermediumkörper 6 als Rundelement ausgebildet, das einen innen liegenden Strömungsraum 7 einschließt, in den das zu reinigende Fluid eingeleitet wird. Das Fluid wird axial, bezogen auf die Längsachse 8 des Filterelementes 5 und der Filtereinrichtung 1 (Fig. 1), in den Strömungsraum 7 eingeführt. Anschließend durchströmt das Fluid die Wandung des Filtermediumkörpers 6 radial von innen nach außen. Dementsprechend bildet die Innenwand des Filtermediumkörpers 6 die Rohseite und die Außenwand die Reinseite.

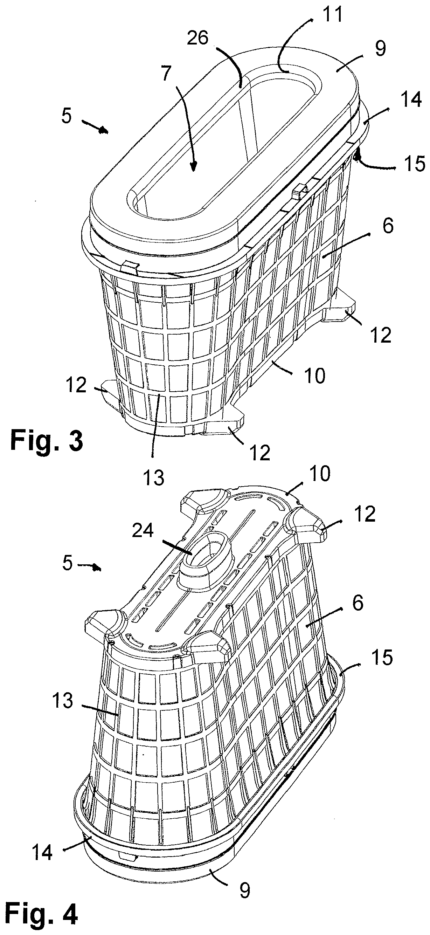

Das Filterelement 5 und der Filtermediumkörper 6 besitzen eine stark ovalisierte Form mit zwei parallel verlaufenden Langseiten und halbkreisförmigen Schmalseiten. Außerdem besitzt das Filterelement 5 eine konusförmige Grundform, bei der die axial gegenüberliegenden Stirnseiten des Filterelementes 5 unterschiedlich groß ausgebildet sind und einen unterschiedlich großen Außenumfang aufweisen. Die axialen Stirnseiten des Filtermediumkörpers 6 sind von jeweils einer Endscheibe 9, 10 strömungsdicht abgedeckt, wobei die Endscheibe 9 an der größeren Stirnseite des Filterelementes 5 offen ausgebildet ist und eine Strömungsöffnung 11 aufweist, über die das Rohfluid in den innen liegenden Strömungsraum 7 einströmen kann. Die gegenüberliegende Endscheibe 10 ist dagegen, wie Fig. 4 zu entnehmen, geschlossen ausgebildet, so dass auch der innen liegende Strömungsraum 7 an dieser Seite axial verschlossen ist.

An der geschlossen ausgebildeten Endscheibe 10 sind Nocken 12 angeformt, die sich radial nach außen erstrecken und an den Langseiten benachbart zu den Schmalseiten positioniert sind. Die Nocken 12, die einteilig mit der Endscheibe 10 ausgebildet sind, stützen das Filter-element 5 im montierten Zustand am Filtergrundgehäuse 3 ab. In Radialrichtung ragen die Nocken 12 nicht weiter vor als die gegenüberliegende, größere Endscheibe 9.

An der Außenwand des Filtermediumkörpers 6 befindet sich ein Stützgitter 13, das insbesondere aus Kunststoff gefertigt und separat von den Endscheiben 9 und 10 ausgebildet ist. Das Stützgitter 13 stützt den Filtermediumkörper an dessen Außenwand in Radialrichtung ab. Aufgrund der radialen Durchströmung des Filtermediumkörpers 6 von innen nach außen entsteht ein nach außen gerichteter Druck im Filtermediumkörper, der von dem Stützgitter 13 aufgenommen wird. Dies stellt sicher, dass sich der Filtermediumkörper 6 durch den Druck des ihn durchströmenden Fluids nicht verformt.

Benachbart zu der Endscheibe 9, in die die Strömungsöffnung 11 für das Einführen des Rohfluids eingebracht ist, befindet sich ein Dichtungsträger 14, der Träger eines Dichtungselementes 15 ist. Der Dichtungsträger 14 ist als eine umlaufende Trägerwand ausgebildet, die in einer Ebene orthogonal zur Längsachse 8 liegt und vorzugsweise einteilig mit dem Stützgitter 13 ausgeführt ist. Der Dichtungsträger 14 ist mit einem geringen axialen Abstand zur obenliegenden Endscheibe 9 und mit einem erheblich größeren axialen Abstand zur untenliegenden Endscheibe 10 angeordnet. Der Außenumfang des Dichtungsträgers 14 besitzt eine größere radiale Erstreckung als die Außenwand des Filtermediumkörpers 6.

Das Dichtungselement 15 ist als ein Dichtring ausgebildet, der bevorzugt in eine Aufnahmenut in der Stirnseite der Trägerwand 14 auf der der benachbarten Endscheibe 9 abgewandten Seite eingesetzt ist. Das Dichtungselement 15 ist der nächstgelegenen Endscheibe 9 abgewandt und der gegenüberliegenden Endscheibe 10 zugewandt und liegt im montierten Zustand an einem umlaufenden Absatz 16 (Fig. 1) an der Innenwand des aufnehmenden Filtergrundgehäuses 3 auf. Der Absatz 16 liegt axial auf Abstand zur oberen Stirnkante des Filtergrundgehäuses 3.

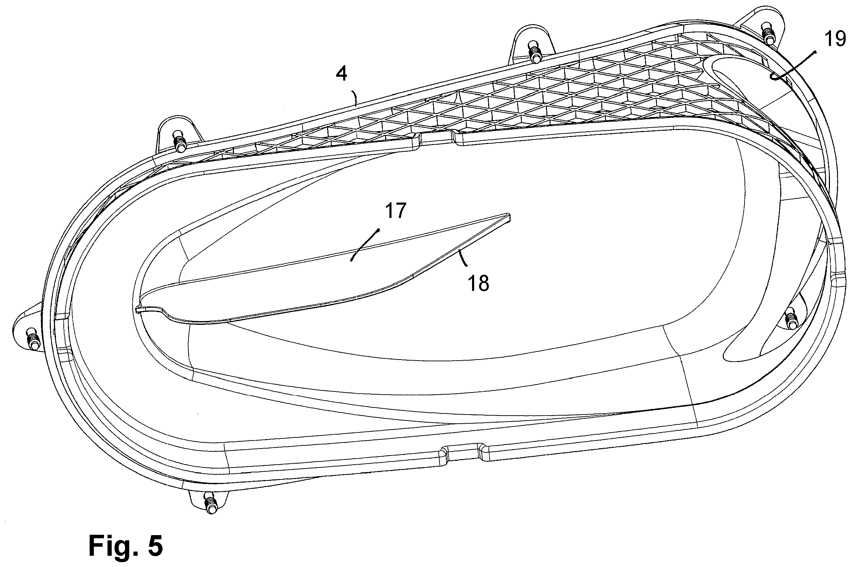

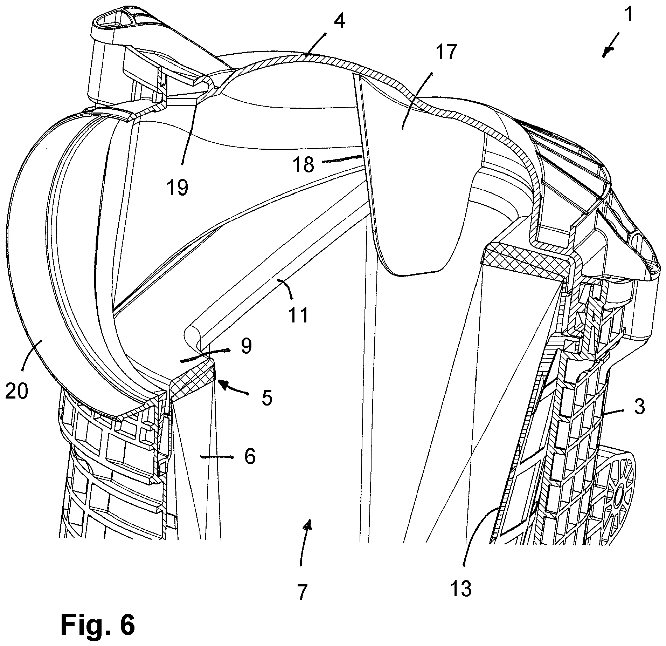

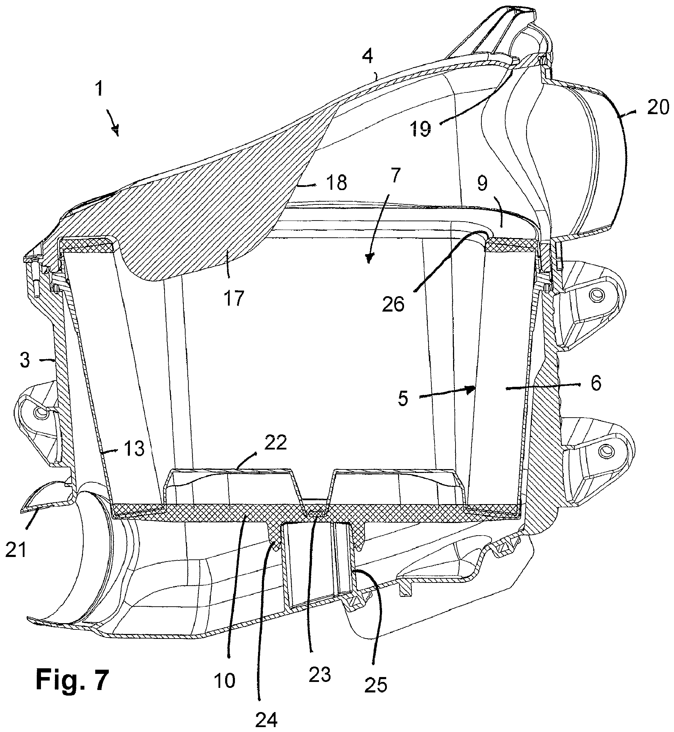

Die folgenden Ausführungen beziehen sich auf den Gehäusedeckel 4, der an seiner Innenseite eine schwertförmige Strömungsleitrippe 17 aufweist (Fig. 5, 6, 7). Die Strömungsleitrippe 17 ist insbesondere geradlinig und in einer Ebene liegend ausgebildet und erstreckt sich im montierten Zustand, wie Fig. 6 und 7 zu entnehmen, axial in den innen liegenden Strömungsraum 7 im Filterelement 5 hinein. Die Strömungsleitrippe 17 ist einteilig mit dem Gehäusedeckel 4 ausgebildet.

In den Gehäusedeckel 4 ist eine seitliche Einströmöffnung 19 eingebracht, über die das Rohfluid radial in die Filtereinrichtung hineinströmen kann. Die Einströmöffnung 19 im Gehäusedeckel 4 korrespondiert mit einer weiteren Einströmöffnung 20, die in das Filtergrundgehäuse 3 eingebracht ist. Bei aufgesetztem Gehäusedeckel 4 liegen die Einströmöffnungen 19 und 20 übereinander, so dass ein durchgehender Strömungsweg für das Rohfluid gebildet ist. Die Stirnseite 18 der Strömungsleitrippe 17 ist im Gehäusedeckel 4 der Einströmöffnung 19 zugewandt. Die Strömungsleitrippe 17 befindet sich insbesondere mittig an der Innenseite des Gehäusedeckels 4, so dass das radial herangeführte Rohfluid von der schwertförmigen Strömungsleitrippe 17 geteilt wird und außerdem eine verbesserte axiale Weiterströmung in Richtung des innen liegenden Strömungsraums 7 im Filtermediumkörper 6 erfährt.

Wie Fig. 1, 2 und 7 zu entnehmen, befindet sich am Filtergrundgehäuse 3 eine seitliche, radiale Abströmöffnung 21 für die Ableitung des gereinigten Fluids. Die Strömungslängsachsen der Einströmöffnungen 19 und 20 einerseits und der Abströmöffnung 21 andererseits verlaufen zumindest annähernd parallel. Die Ebene des Strömungsleitelementes 17 kann ebenfalls zumindest annähernd parallel zu Strömungslängsachsen von Einströmöffnungen und Abströmöffnung verlaufen, wenngleich auch Ausführungen mit nicht-paralleler Anordnung sowohl des Strömungsleitelementes 17 zu den Öffnungen 19, 20 und 21 als auch zwischen den Einströmöffnungen 19 und 20 und Abströmöffnung 21 möglich sind.

Wie Fig. 7 zu entnehmen, befindet sich im Bodenbereich des Filterelementes 5, benachbart zur unteren Endscheibe 10, ein Formkörper 22, der insbesondere einteilig mit dem Stützgitter 13 ausgebildet ist. Der Formkörper 22 ragt axial in den innen liegenden Strömungsraum 7 im Filtermediumkörper 6 hinein und sorgt für eine Stabilisierung des als Faltenfilters ausgeführten Filtermediumkörpers 6. Der Formkörper 22 verjüngt sich zu seiner offenen Stirnseite hin keilförmig und weist im mittleren Bereich einen abgesenkten Dom 23 auf, der in die untere Endscheibe 10 hineinragt. Auch die radial außen liegenden Abschnitte des Formkörpers 22 ragen in die Endscheibe 10 hinein, wodurch eine feste Verbindung zwischen dem Formkörper 22 und der unteren Endscheibe 10 erreicht wird. Der Formkörper 22 ist zumindest im Wesentlichen geradlinig ausgebildet und erstreckt sich in Längsrichtung des Filtermediumkörpers 6. Die radial außen liegenden Abschnitte des Formkörpers 22 sind mit dem Stützgitter 13 verbunden, so dass Stütz- und Haltekräfte von dem Formkörper 22 aufgenommen werden und die untere Endscheibe 10 entlastet wird.

Wie Fig. 7 in Verbindung mit Fig. 4 zu entnehmen, ist an der unteren Endscheibe 10 auf der dem innen liegenden Strömungsraum 7 axial abgewandten Seite ein ringförmiges Abstützteil 24 mittig angeformt, mit dem das Filterelement 5 auf einen gehäuseseitigen Stützdom 25 aufsetzbar ist. Der Stützdom 25 befindet sich am Boden des Filtergrundgehäuses 3. Das ringförmige Abstützteil 24 weist eine längs gestreckte Querschnittsform auf.

Wie Fig. 7 des Weiteren zu entnehmen, sind die Einströmöffnungen 19 und 20 in der Weise positioniert, dass die Stirnfläche der oben liegenden Endscheibe 9 mit den Einströmöffnungen 19 und 20 eine durchgehende, in gleicher Höhe liegende Kontur bildet. Die unten liegende Innenseite der Einströmöffnungen 19 und 20 befindet sich axial in gleicher Höhe wie die außen liegende Stirnfläche der oben liegenden Endscheibe 9. Hierdurch ist eine hindernisfreie Einströmung des Rohfluids gewährleistet.

Wie Fig. 7 in Verbindung mit Fig. 3 zu entnehmen, ist die obere Endscheibe 9 an ihrer radial innen liegenden, der zentralen Öffnung zugewandten Seite mit einer Rundung 26 versehen, die das Einströmen des Rohfluids in den innen liegenden Strömungsraum 7 erleichtert. Der Radius der Rundung 26 an der radialen Innenseite der Endscheibe 9 ist größer als an der radialen Außenseite der Endscheibe 9.

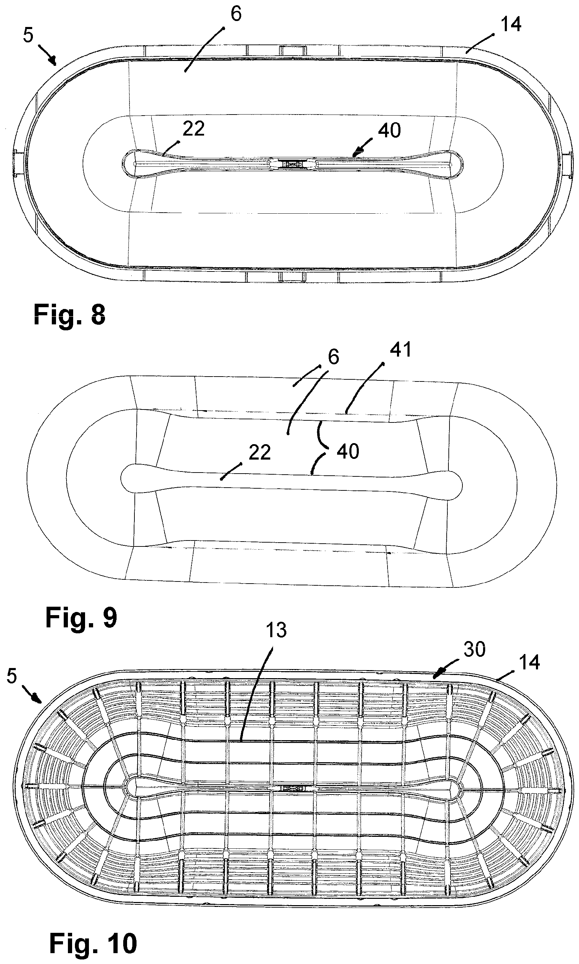

In den Fig. 8 bis 10 ist ein Filterelement 5 in Draufsicht bzw. in einer Ansicht von unten dargestellt, dessen Filtermediumkörper 6 im Bereich der verjüngten Stirnseite eine radiale Einschnürung 40 aufweist. Die Einschnürung 40 befindet sich an jeder der gegenüberliegenden Langseiten des Filtermediumkörpers 6 und bezieht sich nur auf die Langseiten, nicht jedoch auf die halbkreisförmigen Schmalseiten des Filtermediumkörpers.

In Fig. 9 ist gestrichelt eine Verbindungslinie 41 zwischen den gegenüberliegenden Schmalseiten eingetragen, gegenüber der die Einschnürung 40 radial nach innen versetzt ist. Die Langseiten sind im Bereich der Einschnürungen 40 geradlinig ausgebildet und besitzen einen konstanten radialen Abstand zu der Verbindungslinie 41. Die Langseiten besitzen Übergangsabschnitte zum Übergang zu den halbkreisförmigen Schmalseiten, die eine größere radiale Erstreckung aufweisen.

Der Filtermediumkörper 6 weist Einschnürungen 40 sowohl an der radial innen liegenden Seite als auch an der radial außen liegenden Seite im Bereich der verjüngten Stirnseite auf, so dass der Filtermediumkörper entlang jeder Langseite eine konstante Dicke besitzt. Die Außenkontur des Formkörpers 22, der an der schmalen Stirnseite in den Innenraum im Filtermediumkörper 6 hineinragt, folgt der Kontur des Filtermediumkörpers an dieser Seite mit der radialen Einschnürung.

Wie den Fig. 3 und 4 in Verbindung mit Fig. 10 zu entnehmen, weist auch das Stützgitter 13 eine entsprechende Kontur mit radialen Einschnürungen an der unten liegenden Stirnseite mit der Endscheibe 10 auf. Die radial nach innen gerichtete Einschnürung 40 erstreckt sich in Achsrichtung über mindestens die halbe Gesamthöhe des Filtermediumkörpers 6, gegebenenfalls über mindestens 80 % der Gesamthöhe. Im Bereich der oben liegenden Endscheibe 9 weist dagegen der Filtermediumkörper 6 keine derartige radiale Einschnürung auf. In Höhe des Dichtungsträgers 14, der mit axialem Abstand zur nächstgelegenen Endscheibe 9 liegt, besitzt der Filtermediumkörper 6 keine radiale Einschnürung mehr an den Langseiten.

Wie Fig. 10 des Weiteren zu entnehmen, befindet sich an der Unterseite des Dichtungsträgers 14 eine Aufnahmenut 30 zur Aufnahme eines umlaufenden Dichtungselementes.

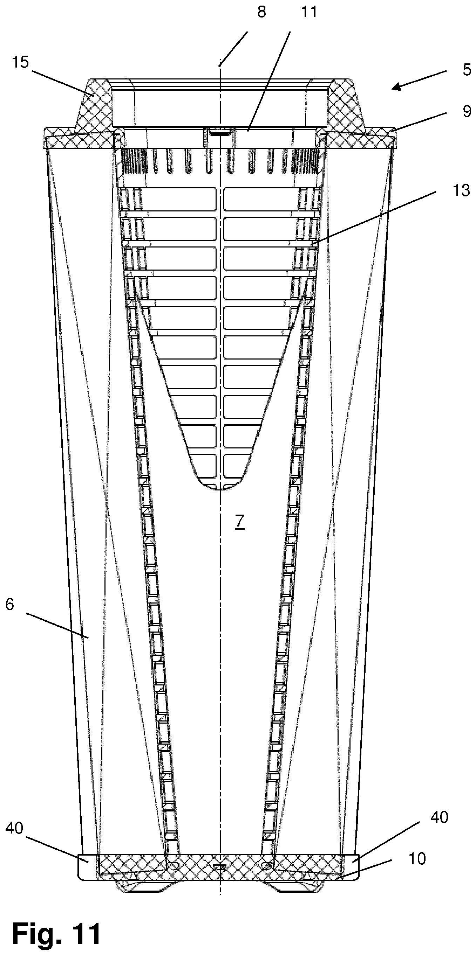

Fig. 11 zeigt schematisch einen Längsschnitt einer alternativen Ausführungsform eines Filterelements 5, welches bevorzugt für die Durchströmung von außen nach innen ausgestaltet ist. Funktional gleiche Elemente sind mit gleichen Bezugszeichen versehen. Der Schnitt verläuft entlang der Längsachse 8 quer durch die Langseiten des Filtermediumkörpers 6 im Bereich der Einschnürungen 40, die entsprechend an der unteren, geschlossenen Endscheibe 10 erkennbar sind. Es ist denkbar, die Einschnürungen 40 stärker auszubilden, insbesondere maximal soweit, dass das Stützgitter auf Höhe der geschlossenen Endscheibe 10 im Bereich der Einschnürungen 40 spitz zusammenläuft. Ebenso ist erkennbar, dass im Bereich der oberen, offenen Endscheibe 9 keine Einschnürung vorhanden ist. Entsprechend ist das Stützgitter 13 radial innerhalb des Filtermediumkörpers 6 angeordnet, um diesen entsprechend der Durchströmung abzustützen und zu stabilisieren. Das Stützgitter 13 ist beidseitig jeweils in die Endscheiben 9, 10 eingebettet. Das Dichtungselement 15 ist in dieser Ausführungsform einstückig mit der offenen Endscheibe 9 ausgeführt, vorliegend wie bevorzugt aus in einer Gießschale gegossenem Polyurethan oder Polyurethanschaum. Bevorzugt ist die geschlossene Endscheibe 10 auf gleiche Weise hergestellt. Das Dichtungselement 15 steht als Ringdichtwulst axial von der Endscheibe 9 bzw. der Stirnseite des Filtermediumkörpers 6 ab und umgibt die Strömungsöffnung 11. Die radiale Innenwandung des Dichtungselements 15 bildet die Radialdichtfläche. Die Querschnitte der Endscheiben 9, 10 und des Filtermediumkörpers 6 sind analog den Figuren 8 bis 10 ausgeführt.

## Patentansprüche

1. Luftfilterelement, insbesondere Rundfilterelement, zur Verwendung im Ansaugtrakt einer Brennkraftmaschine, mit einem als Faltenfilter ausgebildeten, ringförmig geschlossenen Filtermediumkörper (6), dessen Wandung von dem zu reinigenden Fluid bezogen auf die Längsachse (8) des Filtermediumkörpers (6) in Radialrichtung durchströmbar ist, wobei der Filtermediumkörper (6) eine längs gestreckte Querschnittsform mit zwei einander gegenüberliegenden Schmalseiten und zwei die Schmalseiten verbindende, einander gegenüberliegende Langseiten aufweist, wobei sich die Querschnittsfläche des Filtermediumkörpers (6) von einer Stirnseite zur gegenüberliegenden Stirnseite hin verjüngt und der Filtermediumkörper (6) im Bereich der verjüngten Stirnseite an seinen beiden Langseiten jeweils eine radial nach innen gerichtete Einschnürung (40) aufweist, wobei die beiden Langseiten des Filtermediumkörpers (6) im Bereich der gegenüberliegenden, größeren Stirnseite ohne oder zumindest annähernd ohne radiale Einschnürung (40) ausgebildet sind, **dadurch gekennzeichnet, dass** der Filtermediumkörper (6) eine Querschnittsform mit halbkreisförmigen Schmalseiten und geradlinigen Langseiten aufweist, wobei die Langseiten im Bereich der verjüngten Stirnseite des Filtermedium-körpers (6) die radiale nach innen gerichtete, konkave Einschnürung (40) aufweisen.

2. Luftfilterelement nach Anspruch 1, **dadurch gekennzeichnet, dass** die radial nach innen gerichtete Einschnürung (40) geradlinig ausgebildet ist.

3. Luftfilterelement nach einem der Ansprüche 1 bis 2, **dadurch gekennzeichnet, dass** der Abstand zwischen den beiden gegenüberliegenden Einschnürungen (40) konstant ist.

4. Luftfilterelement nach einem der Ansprüche 1 bis 3, **dadurch gekennzeichnet, dass** die radial nach innen gerichtete Einschnürung (40) sich axial mindestens über die halbe Gesamthöhe des Filtermediumkörpers (6) erstreckt.

5. Luftfilterelement nach einem der Ansprüche 1 bis 4, **dadurch gekennzeichnet, dass** die radial nach innen gerichtete Einschnürung (40) sich über die gesamten Langseiten erstreckt.

6. Luftfilterelement nach einem der Ansprüche 1 bis 5, **dadurch gekennzeichnet, dass** in die Stirnseite des Filtermediumkörpers (6) mit reduzierter Querschnittsfläche ein Formkörper hineinragt.

7. Luftfilterelement nach Anspruch 6, **dadurch gekennzeichnet, dass** der Formkörper an einem Stützgerüst angeordnet ist, das an einer Seitenwand des Filtermediumkörpers (6), insbesondere an der Außenwand des Filtermediumkörpers (6) angeordnet ist.

8. Luftfilterelement nach Anspruch 6 oder 7, **dadurch gekennzeichnet, dass** die Außenkontur des Formkörpers der Außenkontur des Filtermediumkörpers (6) an dessen Stirnseite mit reduzierter Querschnittsfläche entspricht.

9. Luftfilterelement nach einem der Ansprüche 1 bis 8, **dadurch gekennzeichnet, dass** sich die Filterfalten des als Faltenfilter ausgebildeten Filtermediumkörpers (6) zumindest annähernd in Durchströmungsrichtung erstrecken.

10. Filtereinrichtung mit einem Filterelement nach einem der Ansprüche 1 bis 9 und mit einem Filtergehäuse (2) zur Aufnahme des Filterelements.

11. Filtereinrichtung nach Anspruch 10, **dadurch gekennzeichnet, dass** das Filtergehäuse (2) ein Filtergrundgehäuse (3) und einen aufsetzbaren Gehäusedeckel (4) umfasst, wobei das Filtergrundgehäuse (3) über seine Höhe eine zumindest annähernd gleich bleibende Querschnittsfläche aufweist.

## Claims

1. Air filter element, in particular round filter element, for being used in an intake section of an internal combustion engine, with an annularly closed filter medium body (6) designed as folded filter and the wall of which can be flowed through in the radial direction by the fluid to be cleaned relative to the longitudinal axis (8) of the filter medium body (6), wherein the filter medium body (6) features a longitudinally extended cross-sectional shape with two mutually opposite narrow sides and two mutually opposite long sides connecting the narrow sides, wherein the cross-sectional area of the filter medium body (6) tapers from one front face to the opposite front face and the filter medium body (6) features a radially inwardly directed constriction (40) in the region of the tapered front face on each of its two longitudinal sides, wherein the two long sides of the filter medium body (6) are designed without or at least approximately without radial constriction (40) in the region of the opposite, larger front face, **characterized in that** the filter medium body (6) features a cross-sectional shape with semicircular narrow sides and straight long sides, wherein the long sides feature the radially inwardly directed concave constriction (40) in the region of the tapered front face of the filter medium body (6).

2. Air filter element according to claim 1, **characterized in that** the radially inwardly directed constriction (40) is designed in a straight line.

3. Air filter element according to one of the claims 1 to 2, **characterized in that** the distance between the two opposing constrictions (40) is constant.

4. Air filter element according to one of the claims 1 to 3, **characterized in that** the radially inwardly directed constriction (40) extends axially at least over half the total height of the filter medium body (6).

5. Air filter element according to one of the claims 1 to 4, **characterized in that** the radially inwardly directed constriction (40) extends over the entire long sides.

6. Air filter element according to one of the claims 1 to 5, **characterized in that** a molded part protrudes into the front face of the filter medium body (6) with reduced cross-sectional area.

7. Air filter element according to claim 6, **characterized in that** the molded part is disposed on a support frame which is disposed on a sidewall of the filter medium body (6), in particular on the outer wall of the filter medium body (6).

8. Air filter element according to claim 6 or 7, **characterized in that** the outer contour of the molded part corresponds to the outer contour of the filter medium body (6) on its front face with reduced cross-sectional area.

9. Air filter element according to one of the claims 1 to 8, **characterized in that** the filter folds of the filter medium body (6) designed as folded filter extend at least approximately in throughflow direction.

10. Filtering device with a filter element according to one of the claims 1 to 9 and with a filter housing (2) for receiving the filter element.

11. Filtering device according to claim 10, **characterized in that** the filter housing (2) comprises a filter basic housing (3) and an attachable to housing cover (4), wherein the filter basic housing (3) features throughout its height an at least approximately constant cross-sectional area.

## Revendications

1. Élément de filtre à air, notamment élément filtrant rond, destiné à être utilisé dans la section d'admission d'un moteur à combustion interne, avec un corps de milieu filtrant (6) fermé en forme d'anneau et conçu en tant que filtre à plis et dont la paroi peut être traversée en sens radial par le fluide à filtrer par rapport à l'axe longitudinal (8) du corps de milieu filtrant (6), le corps de milieu filtrant (6) présentant une forme de la zone transversale allongée longitudinalement avec deux côtés étroits disposés l'un en face de l'autre et deux côtés longs disposés l'un en face de l'autre qui relient les côtés étroits, la forme de la section transversale du corps de milieu filtrant (6) se rétrécissant d'une face frontale vers la face frontale opposée et le corps de milieu filtrant (6) présentant dans la section de la face frontale rétrécie sur ses deux côtés longs respectivement un rétrécissement (40) dirigé radialement vers l'intérieur, les deux côtés longs du corps de milieu filtrant (6) étant réalisés sans ou au moins approximativement sans rétrécissement radial (40) dans la zone de la face frontale opposée plus grande, **caractérisé en ce que** le corps de milieu filtrant (6) présente une forme de la section transversale avec des côtés étroits semi-circulaires et des côtés longs rectilignes, les côtés longs présentant dans la zone de la face frontale rétrécie du corps de milieu filtrant (6) le rétrécissement (40) concave dirigé radialement vers l'intérieur.

2. Élément de filtre à air selon la revendication 1, **caractérisé en ce que** le rétrécissement (40) dirigé vers l'intérieur est réalisé de façon rectiligne.

3. Élément de filtre à air selon l'une des revendications 1 à 2, **caractérisé en ce que** la distance entre les deux rétrécissements opposés (40) est constante.

4. Élément de filtre à air selon l'une des revendications 1 à 3, **caractérisé en ce que** le rétrécissement (40) dirigé radialement vers l'intérieur s'étend axialement au moins sur la moitié de la hauteur totale du corps de milieu filtrant (6).

5. Élément de filtre à air selon l'une des revendications 1 à 4, **caractérisé en ce que** le rétrécissement (40) dirigé radialement vers l'intérieur s'étend entièrement sur les côtés longs.

6. Élément de filtre à air selon l'une des revendications 1 à 5, **caractérisé en ce qu'un** corps moulé fait saillie dans la face frontale du corps de milieu filtrant (6) avec une surface de la section transversale réduite.

7. Élément de filtre à air selon la revendication 6, **caractérisé en ce que** le corps moulé est disposé sur une structure d'appui qui est disposée sur une paroi latérale du corps de milieu filtrant (6), notamment sur la paroi extérieure du corps de milieu filtrant (6).

8. Élément de filtre à air selon la revendication 6 ou 7, **caractérisé en ce que** le contour extérieur du corps moulé correspond au contour extérieur du corps de milieu filtrant (6) sur sa face frontale avec une surface de la section transversale réduite.

9. Élément de filtre à air selon l'une des revendications 1 à 8, **caractérisé en ce que** les plis de filtre du corps de milieu filtrant (6) conçu en tant que filtre à plis s'étendent au moins approximativement dans la direction d'écoulement.

10. Dispositif de filtration avec un élément filtrant selon l'une des revendications 1 à 9 et avec un boîtier de filtre (2) pour recevoir l'élément filtrant.

11. Dispositif de filtration selon la revendication 10, **caractérisé en ce que** le boîtier de filtre (2) comprend un boîtier de base de filtre (3) et un couvercle de boîtier (4) attachable, le boîtier de base de filtre (3) présentant une surface de la section transversale au moins approximativement constante sur sa hauteur.
